# EUROPEAN PATENT SPECIFICATION

(11) **EP 4 575 452 B1**
(45) Date of publication and mention of the grant of the patent: **01.04.2026**
(21) Application number: 23219894.5
(22) Date of filing: 22.12.2023
(51) Int. Cl.: G01N 1/06

(54) **MICROTOME SYSTEM AND CORRESPONDING METHOD**
MIKROTOMSYSTEM UND ENTSPRECHENDES VERFAHREN
SYSTÈME DE MICROTOME ET PROCÉDÉ CORRESPONDANT

(43) Date of publication of application: 25.06.2025
(73) Proprietor: Leica Mikrosysteme GmbH, 1170 Wien (AT)
(72) Inventor: Wurzinger, Paul, 1170 Wien (AT); Katzengruber, Matthias, 1170 Wien (AT); Engelen, Alexandra, 1170 Wien (AT); Kellermann, Peer Oliver, 1170 Wien (AT)
(74) Representative: Maiwald GmbH

(56) References cited:
- US-A- 4 532 838
- US-A1- 2023 341 298

## Description

### Technical Field

The present invention essentially relates to a microtome system for cutting sections from a specimen block, and to a corresponding method.

### Background

Microtomes or microtome systems can be used for cutting sections from a specimen or specimen block like a biological or histological sample. Such microtome systems typically comprise a knife and a specimen holder for the specimen block, which are guided relative to and along each other in order to cut thin slices from the specimen block. In order to generate even cuts or slices, the knife typically has to be aligned with the specimen block or the specimen holder. Such microtome system is described, for example, in EP 4 269 983 A1, and US 2023/341298 A1 or US 4532838 A.

### Summary

In view of the situation described above, there is a need for improvement in microtome systems. According to embodiments of the invention, a microtome system and a method with the features of the independent claims are proposed. Advantageous further developments form the subject matter of the dependent claims and of the subsequent description.

An embodiment of the invention relates to a microtome system for cutting sections from a specimen block. For example, such microtome system can comprise or be configured as an ultra-microtome (microtome for cutting very thin or ultra-thin slices from a specimen block). The microtome system comprises: a specimen holder configured to hold the specimen block, a knife having a knife edge configured to cut a section from the specimen block, and a knife holder holding or configured to hold said knife. The knife comprises a fine facet and a coarse facet, wherein the knife edge is formed, at least in part, by the fine facet. The microtome system further comprises an illumination source and a detector.

The illumination source is configured to illuminate a gap between a front face of the specimen block and the knife edge, when the specimen block is held in the specimen holder, such that the fine facet and at least a part of the coarse facet are illuminated and the light reflected by them (i.e., the fine facet and the at least part of the coarse facet) is reflected, to the detector, by the front face of the specimen block. This is such that a perceivable illuminated area (can also be called a light gap) is produced, wherein at least a part of the knife edge and at least a part of an image of the knife edge mirrored by the front face of the specimen block form boundaries of the illuminated area. For a more detailed illustration and description on how the illuminated area is produced, it is referred to the Figs. and the corresponding description.

The light reflected by the fine facet and the light reflected by at least the part of the coarse facet have essentially the same illumination intensity. Further, the microtome system is configured to image, by means of the detector, the illuminated area, and to determine, based on the imaged illuminated area, a geometric feature of the illuminated area. Such geometric feature can then, for example, be used for automatic alignment of the knife and the specimen block.

Alignment of the knife and the specimen block is, usually, an important step in producing thin sections. Such alignment typically is done by experienced users as these could manage it easily. Automated alignment would provide support in this process and also make it easier for new or unexperienced users.

For manual alignment, the illuminated area typically is observed through a stereomicroscope or the like, in order to correctly assessing the spatial conditions, recognising diffraction effects of the light, which serve as an indicator of alignment. During alignment, the knife and specimen block can be brought closer together to a distance of, e.g., less than 1 µm in order to utilise the diffraction of light at the gap between the knife edge and the front face of the specimen block. Due to the small distance between the specimen block and the knife, a risk of damaging the specimen block or the knife or both through an incorrect manipulation step is increased.

By using the detector for determining geometric features of the illuminated area, automatic alignment, e.g., based on computer analysis, is possible. It has turned out that for determining such geometric features, the distance between the knife edge and the front face of the specimen block can be bigger; this even might be required in order to allow the exact geometric features to be determined.

While this bigger distance is of advantage in the sense of preventing damages, another problem appeared. As mentioned above, knives used for microtomes, typically have a fine facet and a coarse facet. While with very small distances, only the light reflected by the fine facet produces the illuminated area, with bigger distances also light reflected by the coarse facet produces part of the illuminated area. Due to typical ways of how to produce knives with their fine and coarse facets, this results in a poor illumination intensity of the part produced by the coarse facet, compared to the illumination intensity of the part produced by the fine facet. This might make determining the geometric features difficult or even impossible.

In that the parts of the illuminated area by the fine and the coarse facet have, at least essentially, the same illumination intensity, the (automatic) determination of the geometric features is much easier and better.

In an embodiment, the illumination intensity of the light reflected by the fine facet and the illumination intensity of the light reflected by at least the part of the coarse face differ from each other by less than 50% or less than 20% or less than 10%. In this way, both illumination intensities are, at least essentially, the same. Both illumination intensities can also be the same. In an embodiment, the illumination intensity of the illuminated area (comprising light reflected by both the fine and the coarse facet) is, at least essentially, and at least in average, homogeneous. This further improves the (automatic) determination the geometric features.

In an embodiment, the fine facet and the coarse facet are formed at an angle of less than 1° to each other. Conventional knives used for microtomes have such an angle having values of approx. 3°. This, however, results in the poor illumination intensity of the part produced by the coarse facet. This is because with that angle of approx. 3°, the light reflected by the coarse facet is not directed, via the front face of the specimen block, into the detector, or, light arriving at the coarse facet does not directly originate from the illumination source. It has turned out that having an angle of less than 1°, this is greatly improved since the light reflected by the coarse facet can be directed into the detector, just like for the fine facet.

In an embodiment, the illumination source is configured to illuminate the gap between the front face of the specimen block and the knife edge, when the specimen block is held in the specimen holder, such that at least a part of the coarse facet (and preferably also the fine facet) is illuminated directly, and wherein the light, originating from the direct illumination and reflected by at least the part of the coarse facet (and preferably the fine facet) is reflected to the detector by the front face of the specimen block. This further improves the illumination intensities of the two parts and, thus, the (automatic) determination the geometric features.

In an embodiment, the illuminated area has a width, seen from the knife edge to the front face of the specimen block, of more than 10 µm or more than 20 µm or more than 50 µm. The distance can even be more than 100 µm. Such big distance allows an easy and effective (automatic) determination the geometric features, provided that the illumination intensities of the two parts are sufficiently similar.

In an embodiment, the illumination source is configured to illuminate the gap between the front face of the specimen block and the knife edge, when the specimen block is held in the specimen holder, such that at least the part of the coarse facet is illuminated indirectly via the knife holder, and wherein the light, originating from the indirect illumination and reflected by least the part of the coarse facet is reflected to the detector by the front face of the specimen block. In other words, the light arriving at the coarse face does not necessarily have to come directly from the illumination source, as long as the illumination intensities of the two parts are sufficiently similar.

In an embodiment, the knife holder has a surface that is reflecting or diffuse reflecting or partially diffuse reflecting, wherein at least the part of the coarse facet is illuminated indirectly via the surface of the knife holder. Due to that specific surface of the knife holder, the illumination intensities of the two parts can still be sufficiently similar, even though there is no direct illumination of the coarse facet.

In an embodiment, the knife holder comprises a mirror or a separate element that has a reflecting or diffuse or partially diffuse reflecting surface, wherein at least the part of the coarse facet is illuminated indirectly via the mirror or the surface of the separate element. Due to that mirror or specific element on the knife holder, the illumination intensities of the two parts can still be sufficiently similar, even though there is no direct illumination of the coarse facet.

In an embodiment, the illumination source comprises a first light source and a second light source, wherein the first light source is configured to illuminate the fine facet, and
wherein the second light source is configured to illuminate at least the part of the coarse facet. In his way, the two light sources can individually be directed to the respective facet such that the facets are illuminated best.

In an embodiment, the microtome system further comprises an actor, and the knife holder and the specimen holder are configured to be movable relative to one another. For example, the knife holder or the specimen holder is mounted rotatably about an axis. The actor is configured to cause a movement of the knife holder or the specimen, e.g., a rotation of the holder about the axis. The microtome system is configured to: a) automatically align, based on the geometric feature of the illuminated area, the knife edge with the front face of the specimen block by controlling the actor. Alternatively, or additionally, the microtome system is configured to: b) provide indications to a user, based on the detected geometric feature of the illuminated area, on how to manually control the actor in order to align the knife edge with the front face of the specimen block.

Besides the rotation axis, there can be further rotation axes or other ways of moving the knife holder or the specimen holder. Also, further actors might be provided to enable such movement or rotation.

Using such geometric feature detected by a detector can be used to automate the aligning procedure. Such automation can include fully automatic aligning for example, as described for alternative a), and it can also include partial automatic aligning by automatically providing helpful indications or instructions to the user, as described for alternative b). Depending on the alternative used, the actor can be motorized and/or manually operated. The detected geometric feature can be analysed, for example, by means of image or video processing. Such automation also allows unexperienced users to easily and efficiently align the knife or knife edge of the microtome system with the sample. Wrong settings, which might lead to damages, can be avoided or, at least, be reduced.

In an embodiment, the microtome system is configured to control the actor for arranging the knife edge parallel to the front face of the specimen block, such that the geometric feature of the detected illuminated area comprises a constant width along an illuminated area length.

In an embodiment, the knife holder and the specimen holder are configured to be movable relative to one another in a cutting direction, and the microtome system is configured to image, by means of the detector, the illuminated area for at least two different positions of the knife holder and the specimen holder relative to one another in the cutting direction. In particular, during movement of the specimen holder and the knife holder relative to one other, the illuminated area is at all time fully illuminated. This helps improving the determination of the geometric feature due to two (or even more) different instances of image and illuminated areas.

Another embodiment of the invention relates to a method for aligning a knife edge of a knife with a front face of a specimen block for cutting sections from the specimen block. The specimen block is held by a specimen holder, and the knife is held by a knife holder. The knife comprises a fine facet and a coarse facet, wherein the knife edge is formed, at least in part, by the fine facet. Said method comprises: illuminating a gap between the front face of the specimen and the knife edge, such that the fine facet and at least a part of the coarse facet are illuminated and the light reflected by them is reflected to the detector by the front face of the specimen block, such that a perceivable illuminated area is produced. At least a part of the knife edge and at least a part of an image of the knife edge mirrored by the front face of the specimen block form boundaries of the illuminated area, and the light reflected by the fine facet and the light reflected by at least the part of the coarse facet have essentially the same illumination intensity. The illuminated area is then, by means of a detector, imaged and, based on the imaged illuminated area, a geometric feature of the illuminated area is determined. Further, the edge of the knife is aligned with the front face of the specimen block based on the geometric feature.

With respect to advantages and further embodiments of the method, it is referred to the above description of embodiments of the microtome system and its features and advantages, which apply here correspondingly.

Further advantages and embodiments of the invention will become apparent from the description and the appended figures.

### Short description of the Figures

- Fig. 1a: schematically shows a microtome system according to an embodiment;
- Fig. 1b: schematically shows a part of the microtome system of Fig. 1a in a more detailed view;
- Fig. 2a: schematically shows an illuminated area to be produced according to an embodiment;
- Fig. 2b: schematically shows an illuminated area to be produced according to another embodiment;
- Fig. 3a: schematically shows a microtome system according to another embodiment;
- Fig. 3b: schematically shows a part of the microtome system of Fig. 3a in another view;
- Figs. 4a, 4b, 4c, 4d: schematically show an illuminated area for explaining different embodiments;
- Fig. 5: schematically shows a microtome system according to another embodiment;
- Fig.6: schematically shows a microtome system according to another embodiment; and
- Fig. 7: schematically shows a method according to an embodiment in a flow diagram.

### Detailed Description

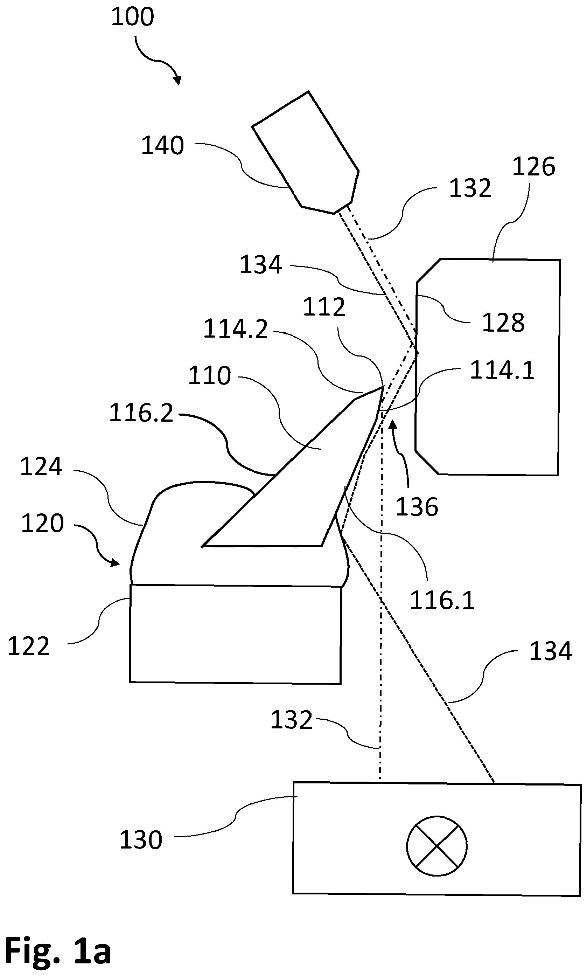

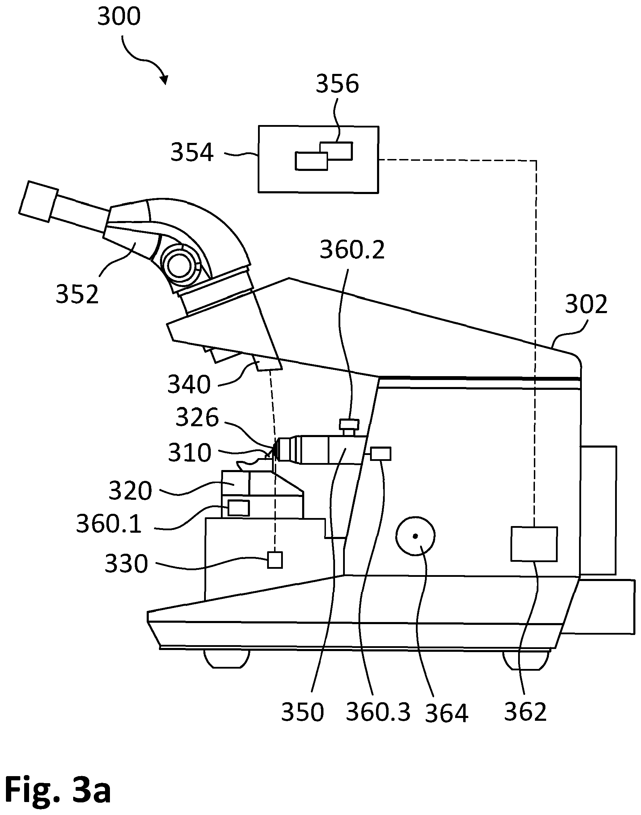

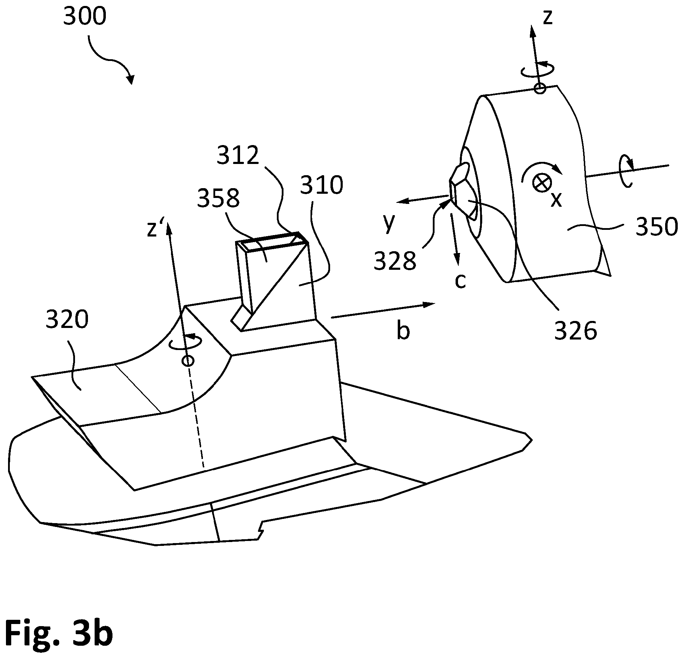

Fig. 1a schematically illustrates a microtome system 100 according to an embodiment. The microtome system 100 is, preferably, an ultra-microtome system or comprises an ultra-microtome and is intended for cutting sections or slices form a specimen block. It is noted that in Fig. 1a, only components and elements for illustrating at least parts of embodiments of the invention are shown. For another view showing additional parts of microtome system, it is referred to Figs. 3a, 3b.

The microtome system 100 comprises a knife holder 120, which is configured to hold - and, in the situation shown in Fig. 1a, holds - a knife 110. By means of example, the knife holder 120 comprises a base element 122 and a mounting means 124, wherein the knife 110 is mounted to the base element 122 by means of the mounting means 124.

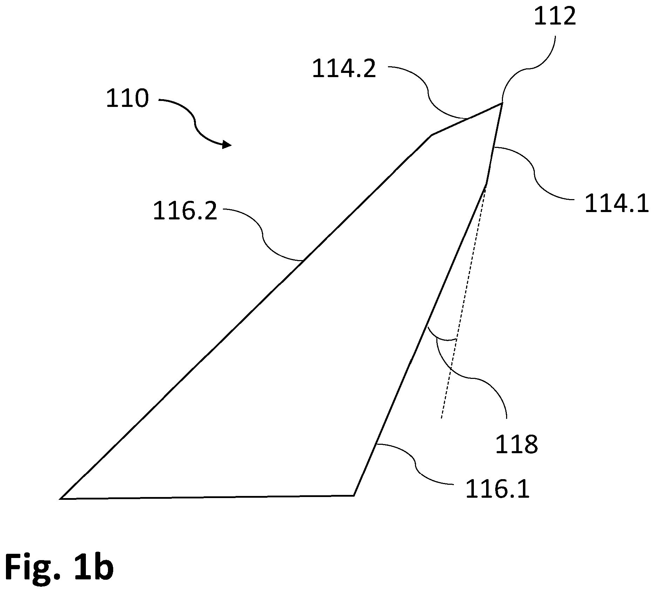

Further, the microtome system 100 comprises a specimen holder configured to hold a specimen block 128. In Fig. 1, only the specimen block 126 but not the specimen holder is shown. The specimen block 126 comprises a front face 128, from which sections or slices are to be cut.

The knife 110 has a knife edge 112, in Figs. 1a, 1b at the top right of the knife 110. The knife edge 112 is configured to cut a section from the specimen block 126 when the knife edge and the front face 128 of the specimen block are properly aligned and when the knife and the specimen block are moved relative to one another.

The knife 110 comprises a fine facet 114.1 and a coarse facet 116.1; this is best shown in Fig. 1b. The fine facet 114.1 and the coarse facet 116.1 are, by means of example, arranged next to each other; it is noted, however, that there could be provided an intermediate section between the fine facet 114.1 and the coarse facet 116.1. Both, the fine facet 114.1 and the coarse facet 116.1 can, for example, be grinding facets, i.e., the faces can be obtained by grinding the knife surface. Other ways of manufacturing or processing the knife surfaces are possible. The fine facet 114.1, typically, has a smother surface than the coarse facet 116.1 in order to obtain a thin and smooth cut.

As can be seen in Fig. 1b, the knife 110 comprises another fine facet 114.2 and another coarse facet 116.2, which can be similar to the facet 114.1 and the coarse facet 116.1, however, located at the other side of the knife 110. The knife edge 112 is formed, at least in part, by the fine facet 114.1, in the example of Fig. 1b, the knife edge 112 is also formed, at least in part, by the other fine facet 114.2.

The fine facet 114.1 and the coarse facet 116.1 are formed at an angle 118 to each other. In an embodiment, this angle 118 is less than 1°, for example, approx. 0,75°. It is noted that in the schematic illustration of Fig. 1b, this angle is exaggerated.

The microtome system 100 further comprises an illumination source 130, and
a detector 140; the detector 140, for example, can be or comprise a camera. The illumination source 130 can 6comprise, in an embodiment, a LED or other light source and a diffusion element or filter in order to provide even illumination. It is noted that the illumination source 130 can also comprise multiple light sources.

As can be seen in Fig. 1a, there is a gap 136 between the front face 128 of the specimen block 126 and the knife edge 112. Before cutting sections from the specimen block, the knife edge 112 and the front face 128 have to be aligned to each other, in particular, such that the knife edge 112 is oriented parallel to the front face 128. This gab 136 is illuminated in order to generate a illuminated area (light gap) which is detected by the detector 140.

In order to achieve this, the illumination source 130 is configured to illuminate the gap 136, when the specimen block 126 is held in the specimen holder, such that the fine facet 114.1 and at least a part of the coarse facet 116.1 are illuminated and the light reflected by them is reflected, to the detector 140, by the front face 128 of the specimen block 126, such that the perceivable illuminated area is produced.

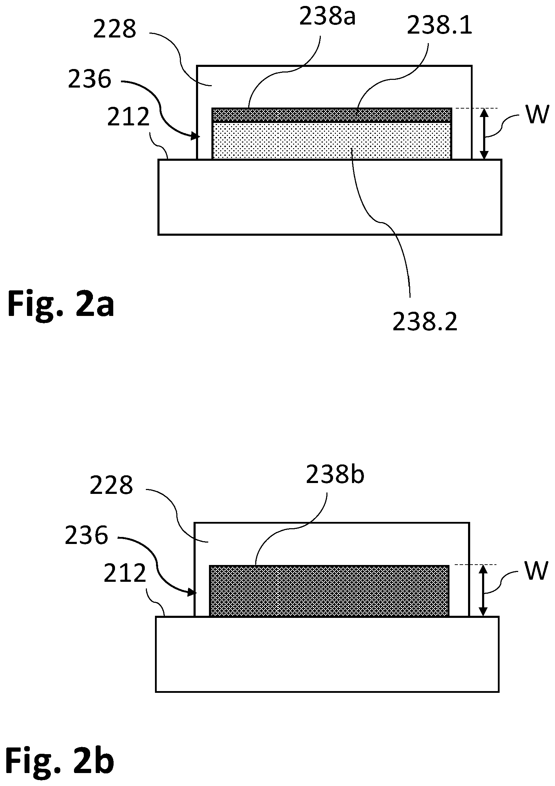

At least a part of the knife edge 11 and at least a part of an image of the knife edge mirrored by the front face 128 form boundaries of the illuminated area. This is shown in Figs. 2a, 2b and explained below.

For illustration purposes, in Fig. 1a, a first light beam 132 and a second light beam 134, both originating from the illumination source 130, are shown. As can be seen, the first illumination beam 132 is directed towards the fine facet 114.1, i.e., the fine facet 114.1 is directly illuminated by the illumination source 130. The first light beam 132 is then reflected, by the fine facet 114.1, towards the front face 128. At or by the front face 128, the first light beam 132 is again reflected and then directed towards and into the detector 140.

As can be also seen, the second illumination beam 134 is directed towards the knife holder 120 or the mounting means 122 thereof, and is reflected by the knife holder 120 towards the coarse facet 116.1, i.e., the coarse facet is indirectly illuminated by the illumination source 130. The second light beam 134 is then reflected, by the coarse facet 116.1, towards the front face 128. At or by the front face 128, the second light beam 134 is again reflected and then directed towards and into the detector 140.

Depending on the angle 188 formed between the fine facet 114.1 and the coarse facet 116.1, light that originates from a direct illumination of the coarse facet 116.1 by the illumination source 130, will either be directed, via the front face 128, into the detector 140 or not. With a large angle 118, as illustrated in Fig. 1a, such light from direct illumination of the coarse facet 116.1 will not reach the detector 140. Rather, such light will be reflected by the coarse facet 116.1 and the front face 128 and then pass the detector 140. If, however, the angle 118 is small enough, i.e., less than 1° for example, such light will be reflected by the coarse facet 116.1 and the front face 128 and then hit the detector 140.

With a larger angle 118, light reflected by the coarse facet 116.1 and by the front face 128 will hit the detector 140 only if this light does not originate from direct illumination of the coarse facet 116.1 but from indirect illumination as illustrated by the second light beam 134 in Fig. 1a. This indirect illumination, in a typical case, results in an illumination intensity of the light reflected by the coarse facet 116.1, or at least a part thereof, being rather low. This is because the knife holder 120 or the mounting means 122 thereof have a poor reflection quality, compared to the knife surfaces. Thus, the light reflected by the fine facet 114.1 has a much higher illumination intensity than the light reflected by the coarse facet 116.1.

If, however, the angle 118 is small and the coarse facet 116.1 can be directly illuminated such that the light reflected by it can hit the detector, the light reflected by the coarse facet 116.1, or at least a part thereof, is much higher, in particular, similar to that of the light reflected by the fine facet 114.1. In this way, the light reflected by the fine facet 114.1 and the light reflected by at least the part of the coarse facet 116.1 can have essentially the same illumination intensity.

Thus, in an embodiment, the angle 118 which the fine facet 114.1 and the coarse facet 116.1 form, is less than 1°. In an embodiment, the knife holder 120 has a surface that is reflecting or diffuse reflecting or partially diffuse reflecting. Alternative, a mirror or other reflecting element can be provided at the knife holder 120. In this way, the coarse facet 116.1 can be illuminated indirectly via this surface or mirror or element, i.e., like shown with the second light beam 134 in Fig. 1a, and still achieving a high illumination intensity of the light reflected by the coarse facet 116.1, or at least a part thereof, in particular, similar to that of the light reflected by the fine facet 114.1. In this way, the light reflected by the fine facet 114.1 and the light reflected by at least the part of the coarse facet 116.1 can also have essentially the same illumination intensity.

Further, the microtome system 110 is configured to image, by means of the detector 140, the illuminated area, and to determine, based on the imaged illuminated area, a geometric feature of the illuminated area. Such geometric feature will be described below. In this way, i.e., based on such geometric feature, the knife edge 112 and the front face 128 can be aligned to each other, e.g., such that the knife edge 112 is oriented parallel to the front face 128.

Fig. 2a schematically illustrates a front face 228 of a specimen block and a knife edge 212. Both is shown as seen from the detector as illustrated in Fig. 1a, for example. Between the front face 228 and the knife edge 212, there is a gap 216 as also described with respect to Fig. 1a.

In addition, an illuminated area 238a is shown in Fig. 2a. As mentioned above, the illumination is such that fine facet and at least a part of the coarse facet are illuminated and the light reflected by them is reflected, to the detector, by the front face 228 of the specimen block, such that a perceivable illuminated area 238a is produced. At least a part of the knife edge 212 and at least a part of an image of the knife edge mirrored by the front face 228 of the specimen block form boundaries of the illuminated area 238a. This can clearly be seen in Fig. 2a, with the upper and lower edges of the illuminated area 238a being these boundaries. A width of the illuminated area 238a, seen from the knife edge 212 to the front face 228 of the specimen block, is referred to be reference numeral W. As mentioned above, this width W can be more than 10 µm or more than 20 µm.

The illuminated area 238a comprises a first part 238.1 and a second part 238.2. As mentioned above, there is light reflected by the fine facet and there is light reflected by the coarse facet. In Fig. 2a, the first part 238.1 corresponds to light reflected by the fine facet, and the second part 238.2 corresponds to light reflected by the coarse facet.

In Fig. 2a, the first part 238.1 and a second part 238.2 have a different shading, illustrating a (slightly) different illumination intensity, at least in average. This is, on the one hand, to illustrate that without having a small angle between the fine and coarse facet and without having a proper reflection at the knife holder, these two illumination intensities can vary much. With the second part 238.2 having a very low illumination intensity, for example, detecting geometric features like edges of the illuminated area automatically can be very difficult. This is, for example, because an automated analysis typically detects parts of high intensity only and the small first part 238.1 does not allow a sufficiently exact determination such that a proper alignment is possible.

With the second part 238.2 having an illumination intensity that differs, in average, less than 50% from that of the first part 238.1, or that even is essentially the same, the entire width of the illuminated area 238a can be used for the automated analysis of geometric features.

Fig. 2b schematically shows a similar situation as Fig. 2a, however, the illuminated area 238b does not comprise two parts. This is, for example, because the illumination intensities of the light at the fine and coarse facets are the same or almost the same, such that in the illuminated area detected in the detector, no discrimination is possible. In other words, the gap 236 is (at least essentially) evenly or homogeneously illuminated.

Figs. 3a, 3b schematically illustrates a microtome system 300 according to an embodiment in different views; in different ones of the Figs. different parts or components are shown, some parts or components are shown only in some of the Figs. Whereas Fig. 3a shows a side view or cross section, Fig. 3b shows a perspective view. Figs. 3a, 3b will be described together in the following. It is noted that microtome system 300 basically can correspond to the microtome system 100 of Figs. 1a, 1b, however, actional components are shown.

The microtome system 300 comprises a knife holder 320 holding a knife 310, and a sample holder 350 holding a specimen block 326, the specimen block having a front face 328. The microtome system 300 further comprises an illumination source 330, and
a detector 240; the detector 240, for example, can be or comprise a camera.

The microtome system 300 comprises a housing 302, in which housing 302 required components can be arranged. The microtome system 300 further comprises, in an embodiment, a microscope 352, which is arranged at the housing 302 and is configured such that a user can look at (and inspect) the region of the specimen block 326 and the knife 310 with knife edge 312. For example, a user might inspect the cutting movement and/or the quality of the knife edge 314, in this way. The microtome system 300 further comprises, by means of example, a controller 362.

The illuminated area, generated by the illumination 330 by illuminating the (physical) gap between the specimen block 326 (or its front face 328) and the knife 310 (or its knife edge 312) is detected by the detector 340 as also described with respect to Figs. 1a, 1b. This might require appropriate arrangement and/or orientation of the detector 340.

Also, the microscope 352 might be arranged and/or oriented such that this illuminated area is visible by means of the microscope 352. Further, the microscope 352 does not need to be an optical microscope but can use the detector 340 in order to provide an image of the region on an integrated display. In an embodiment, the detector 340 can also be integrated into the microscope 352.

The microtome system 300 further comprises, in an embodiment, a display 354, on which information about the cutting process and/or indications 356 for the alignment of the knife edge 312 with the front face 328 of the specimen block 326 can be displayed to the user. In an embodiment, the microtome system 300 is also configured to render a user interface or graphical user interface, in particular, by using the display 354. In addition, input devices like switches, buttons, a keyboard and a computer mouse might be used. Also, display 354 can comprise a touch screen. By means of example, the microtome system 300 comprises, a reception box 358 which can be arranged at or on the knife 310, for example.

The operating mechanism of the microtome system 300 is, in general, that the specimen 326 is moved along a cutting direction c relative to the knife edge 312 when the specimen block is properly aligned with the knife edge. The knife edge 312 is configured to cut a section (or slice) from the specimen block 326. A section that has been cut off the specimen block 326 can be collected in the collection box 356, for example. In order to provide such movement, the knife holder 320 and the specimen holder 350 are configured to be moveable relative to one another, in particular, in the cutting direction c. Basically, either or both of the knife holder 320 and the specimen holder 350 can be configured to be movable along cutting direction c. In an embodiment, (only) specimen holder 350 is configured to be movable in cutting direction c (in both ways, up and down). In addition, the knife holder 320 and the specimen holder 350 can be configured to be movable relative to one another in a feed direction b, in order to bring the knife edge 312 in contact with the specimen block 326 and, in particular, to feed the specimen block 326 after a section or slice has been cut from the specimen block 326.

In an embodiment, the knife holder 320 and, thus, the knife 310, are configured to be movable in the feed direction b, i.e., towards (and also away from) the specimen block 326 or the specimen holder 350. Basically, however, also the specimen holder 350 might be configured to be movable in (or against) the feed direction b towards the knife 310.

As mentioned earlier, in order to generate proper and precise sections cut from the specimen, the knife 310 or knife edge 312 and the specimen block 326 or specimen holder 350 have to be aligned prior to cutting.

This can require that the knife holder 320 or the specimen holder 350 is to be mounted movable, e.g., rotatably about at least one axis. In Fig. 3b, four axes are shown for illustration purposes: a first axis z', a second axis x, a third axis y, and a further axis z. Rotating the knife holder 320 and/or the specimen holder 350 around one or more of these axes allows aligning the knife edge 312 with the front face 328 of the specimen block 326 as will be described in more detail later.

As can be seen from Fig. 3b, in general, the specimen holder 350 might be configured to be rotatable around each of three different axes x, y, and z, for example. Similarly, the knife holder 320 might be configured to be rotatable around each of three different axes, for example, from which only axis z' is shown (similar, axes x' and y' might be used). Note that the axes shown are oriented according to a Cartesian coordinate system, as is typical for such microtome systems; however, this is for illustration purposes only and other ways of defining such axes are possible. Rotating the knife holder 320 and the specimen holder 350 around three different axes each, allows many degrees of freedom for aligning the knife edge 312 and the specimen front face 328. Nevertheless, three different axes in total for both, the knife holder 320 and the specimen holder 350 can be sufficient for providing alignment in sufficiently many ways.

In an embodiment, the knife holder 320 is mounted rotatably around the first axis z', wherein the first axis z' is parallel to the cutting direction c. The specimen holder 350 is mounted rotatably around the second axis x and the third axis y. The third axis y is parallel to the feed direction b. As can be seen from Fig. 3b, an equivalent to the knife holder 320 being mounted rotatably around the first axis z', would be the specimen holder 350 being mounted rotatably around the axis z. In both alternatives, the knife edge 312 can be rotated relative to the specimen block 326 or its front face 328 in the same or an equivalent way. Similarly, the knife holder 320 might be rotatable around further axis x' and/or y '(not shown in Fig. 3a), which would be equivalent to the specimen holder being rotatable around axis x and/or y. Which component of knife holder and specimen holder is to be rotatable around which axes might be chosen depending on a preferred way of implementation in the specific microtome system.

Further, it is noted that, basically, only one or two axes around which one of knife holder and specimen holder are rotatable, can be sufficient to align the knife edge 312 and the specimen front face 328. Note that actors can be provided to the knife holder 320 and/or specimen holder 350 in order to facilitate the required rotation around the respective axis.

The controller 362 can, for example, be electrically and/or communicatively coupled to the detector 340 in order to receive data or information detected or acquired by the detector 340. In an embodiment, the controller 362 can also be electrically and/or communicatively coupled to the illumination source 330.

By means of example, the microtome system 300 comprises three actors, a first actor 360.1, a second actor 360.2, and a third actor 360.3, as shown in Fig. 3a. Note that, if only one or two axes are used about which the knife holder 320 and/or the specimen holder 350 are rotatably mounted, one or two actors would be sufficient.

The first actor 360.1 is configured to cause a rotation of the knife holder 320 about the first axis z'. Note that a rotation of the knife holder 320 results in a corresponding rotation of the knife 310 around axis z'. The second actor 360.1 is configured to cause a rotation of the specimen holder 350 about the second axis x; such rotation corresponds to a tilt of the specimen holder 350 and, thus, of the specimen block 326. The third actor 360.3 is configured to cause a rotation of the specimen holder 350 about the third axis y. Each of the first, second and third actor 260.1, 260.2, 260.3 can be motorized. The controller 362 can be electrically and/or communicatively coupled to each of the first, second and third actor 260.1, 260.2, 260.3 in order to operate them and, thus, to cause the mentioned rotation about the respective axis.

In an embodiment, one, two or all three of the first, second and third actor 360.1, 360.2, 360.3 can also be un-motorized but be configured to be actuated or operated manually, for example, like a hand wheel, in order to cause the mentioned rotation. Also, one or more of the first, second and third actor 360.1, 360.2, 360.3 can be motorized but configured for manual operation, for example, such that a user has to actuate an operating element like a switch in order to actuate the actor.

In an embodiment, the microtome system 300 comprises a hand wheel or actuation wheel 364, as shown in Fig. 3a. The hand wheel 364 is configured (particularly, by means of a mechanism not shown here) to cause a cutting movement such that the specimen holder 350 moves in the cutting direction c, up and down, in order to cut sections from the specimen block. The hand wheel 364 can also be configured to cause a feed movement (of the knife holder 320, for example) in the feed direction b. Both movements, cutting movement and feed movement, can be coupled such that efficient cutting of several slices is possible. The hand wheel 364 can be motorized and/or configured for manual operation. In case the hand wheel is motorized, an automated cutting movement is possible, such that the hand wheel might be used only for additional and/or correctional movements.

In addition, a side movement in a direction of second axis x might be possible in order to move the specimen block, after a section or slice has been cut, in order to cut another section or slice next to the first one. The hand wheel 364 can also be configured to provide such side movement. Also, such side movement could be implemented in another way, for example by an additional (motorized) hand wheel.

As mentioned above, the microtome system 300 is configured to image, by means of the detector 340, the illuminated area, and to determine, based on the imaged illuminated area, a geometric feature of the illuminated area.

In an embodiment, the microtome system 300 is configured to image, by means of the detector, the illuminated area for at least two different positions of the knife holder 320 and the specimen holder 350 relative to one another in the cutting direction c. This also means that the knife holder 320 and the specimen holder 350 are to be moved relative to one another in the cutting direction c for determining the geometric feature. For example, the geometric feature can be determined at each of the at least two different positions and then an average value is determined as the value for the geometric feature to be used.

The microtome system 300 is, in an embodiment, further configured to: a) automatically align, based on the geometric feature of the illuminated area, the knife edge 312 with the front face of the specimen block 326 by controlling the actor, and/or
b) provide indications to a user, based on the detected geometric feature of the illuminated area, on how to manually control the actor in order to align the knife edge 312 with the front face of the specimen block 326. Such indications, e.g., in the form of instructions 356, can be provided at the display 354 as mentioned above.

The actor to be control for the alignment can either be the first actor 360.1, the second actor 360.2, or the third actor 360.3. Also, two of them or all three of them can be controlled for the alignment. The geometric feature of the illuminated area (light gap), can be of different type.

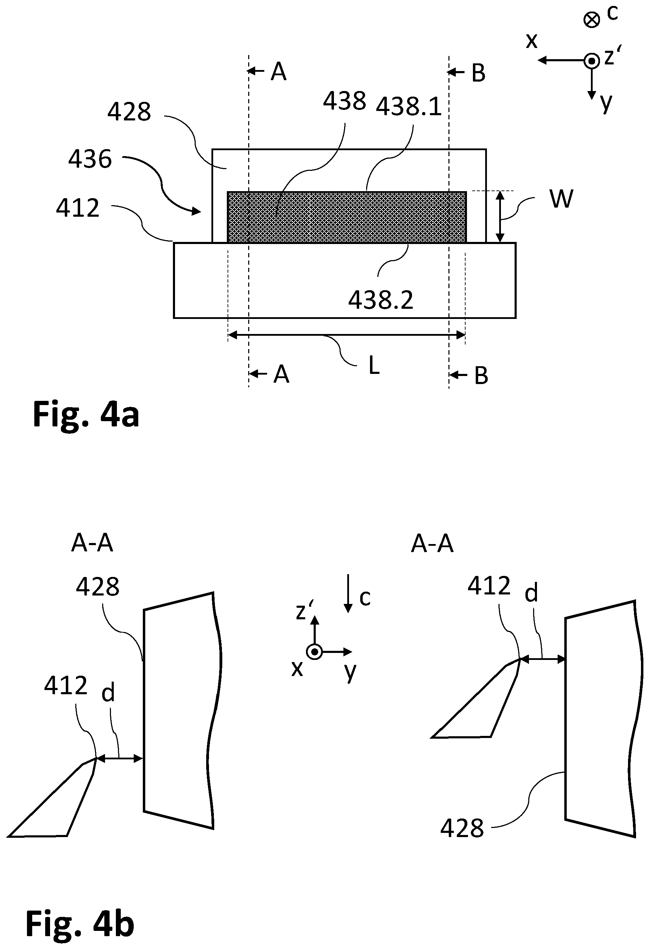

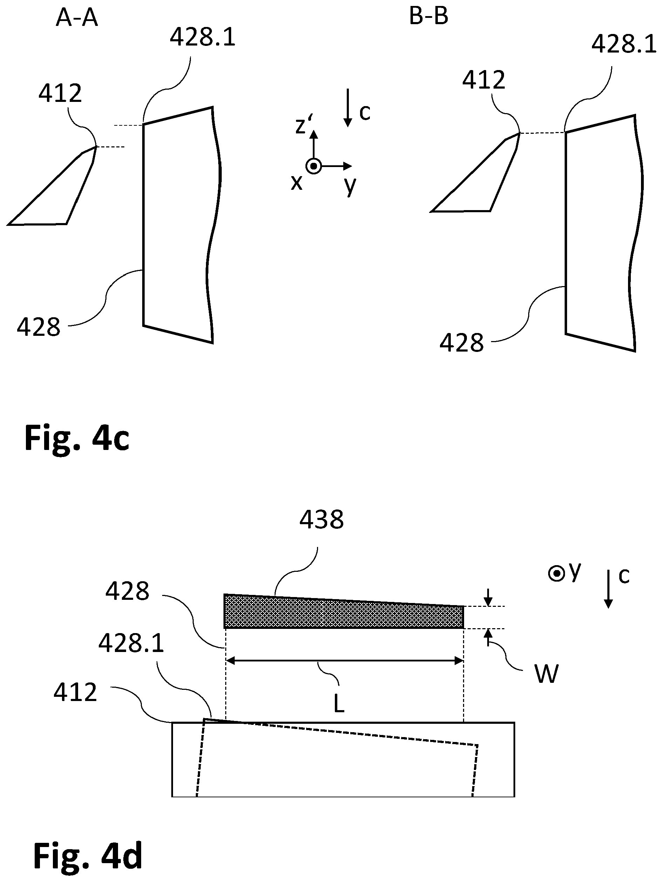

Figs. 4a, 4b, 4c, 4d illustrate the illuminated area for explanation of different types of geometric feature of the illuminated area which can be determined and used for the alignment as mentioned above. It is noted that also multiple of such (different) geometric features can be determined, where the different geometric features are used to align the knife edge with the front face of the specimen block in different ways, e.g., by rotation about different ones of the axes mentioned above. In addition, the three axes x, y, z' and the cutting direction c (see also Fig. 3b) are shown as reference.

Fig. 4a schematically illustrates a front face 428 of a specimen block and a knife edge 412. Both is shown as seen from the detector as illustrated in Fig. 1a, for example. Between the front face 228 and the knife edge 212, there is a gap 436 as also described with respect to Fig. 1a. In addition, an illuminated area 438 is shown in Fig. 4a, having a first (or upper) boundary 438.1 and a second (or lower) boundary 438.2. The situation shown in Fig. 4a is similar to those of Figs. 2a, 2b.

Further, the width W of the illuminated area 438 (i.e., a distance between the first boundary 438.1 and the second boundary 438.2) as well as a length L of the illuminated area 438 along axis x are shown. For example, the geometric feature can comprise the width W of the illuminated area or the width W along the length L of the illuminated area. As can be seen in Fig. 4a, if the knife holder or the knife are rotated about the axis z', the width W along the length L will change. In particular, when the knife is rotated clockwise (in Fig. 4a), the width W at the left end of the illuminated area 438 will become smaller, whereas at the right end the width W will become bigger.

Thus, determining the width W along the length L of the illuminated area as a geometric feature allows alignment of the knife edge and the front face, e.g., in that the knife holder and knife are rotated about axis z' such that the width W is constant along the length L.

Thus, in an embodiment, the microtome system can be configured to control
the first actor as the actor for arranging the knife edge parallel to the front face of the specimen, such that the geometric feature of the detected illuminated area comprises a constant width along the length of the illuminated area. This can comprise, for example, that the axis z' is parallel to the cutting direction c.

While in an embodiment, such aligning can be performed automatically, in another embodiment, indications might be generated from the geometric feature and provided to the user, as mentioned above. If a value of the width W is smaller, for example, on the left end of length L (in Fig. 4a) than on the right end of length L, such indication might include the instruction for the user to operate the first actor such that the knife holder (and, thus, the knife and the knife edge 412) is rotated about the first axis z' in a certain direction (clockwise, for example). In addition, such instruction could include a measure of how much or how far the knife holder has to be rotated about the first axis z'.

When the knife edge is aligned with the front face such that the knife edge is parallel to the front face, sections or slices of constant or even thickness can be cut from the specimen block.

Fig. 4b illustrates the situation of Fig. 4a in a cross section along line A-A, in two different positions of the knife holder (and the knife 412) and the specimen holder (and the specimen block 428) relative to one another in the cutting direction c. On the left side of Fig. 4a, the knife and knife edge 412 are at a lower position, along the cutting direction c, than on the right side of Fig. 4a, where the specimen block and its front face 428 remain at the same position along the cutting direction c. It is noted that this is just for illustration purposes; as mentioned above, usually the specimen block is moved along the cutting direction c, but this results in the same relative positions.

Reference numeral d refers to a distance between the knife edge 412 and the front face 428. This distance can be seen along a line being orthogonal to the front face 428 and hits the knife edge 412. The distance d is related to the width W, as can be seen from Fig. 4a. The smaller the distance d, the smaller the width W, and the bigger the distance d, the bigger the width W.

For example, the geometric feature can comprise the width W of the illuminated area for at least two different positions of the knife holder and the specimen holder relative to one another in the cutting direction c. Such geometric feature can, for example, also comprise that the width W of the illuminated remains constant during a movement of the knife holder and the specimen holder relative to one another in the cutting direction c.

As can be seen in Fig. 4b, if the specimen holder and the specimen block are rotated about the axis x, the distance d and thus the width W will change depending on the position of the knife edge relative to the front face along cutting direction c. In particular, when the specimen block is rotated clockwise (in Fig. 4b) about axis x, the distance d and thus the width W in the position shown on the left side will decrease, whereas the distance d and thus the width W in the position shown on the right side will increase.

Thus, determining the width W at such two different positions, for example, as a geometric feature allows alignment of the front face to be parallel to the cutting direction; this also is an alignment of the knife edge with the front face.

Thus, in an embodiment, the microtome system can be configured to control
the second actor as the actor for arranging the knife edge parallel to the front face of the specimen, such that the geometric feature of the detected illuminated area comprises a constant width at at least two different positions of the knife holder and the specimen holder relative to one another in the cutting direction.

While in an embodiment, such aligning can be performed automatically, in another embodiment, indications might be generated from the geometric feature and provided to the user, as mentioned above. If a value of the width W is smaller, for example, on the lower position of the knife edge (left side in Fig. 4b) than on the upper position of the knife edge (right side in Fig. 4b), such indication might include the instruction for the user to operate the second actor such that the specimen holder (and, thus, the specimen and its front face 428) is rotated about the second axis x in a certain direction (counter-clockwise, for example). In addition, such instruction could include a measure of how much or how far the specimen holder has to be rotated about the second axis x.

When the knife edge is aligned with the front face such that the knife edge is parallel to the front face, sections or slices of constant or even thickness can be cut from the specimen block.

When the front face is aligned parallel to the cutting direction, sections or slices of constant or even thickness can be cut from the specimen block.

Fig. 4c illustrates the situation of Fig. 4a in a cross section. There are two different relative positions between the upper edge 428.1 of the front face 428 and the knife edge 412 shown, one on the left side and one on the right side.

On the left side, the relative position between the specimen block and the knife edge 412 is such that the upper edge 428.1 is located above the knife edge 412, viewed in the cutting direction c. On the right side, the relative position between the specimen block and the knife edge 412 is such that the upper edge 428.1 is located approximately at or slightly below the knife edge 412, viewed in the cutting direction c.

The illuminated area as detected by the detector is visible as such (with the form of a slit or rectangle with sharp edges) only if the entire upper edge 428.1 of the front face 428 is located sufficiently above the knife edge 412, viewed in cutting direction c. This situation is illustrated in Fig. 1a. This means that, with an upper edge 428.1 being parallel to the knife edge 412 and the specimen block moving down in the cutting direction c, the light gap will become narrower and will disappear, when the upper edge 428.1 has moved sufficiently below the knife edge 412. This is similar with the lower edge of the front face 124 being or moving up sufficiently close to or above the knife edge 412, viewed in cutting direction c.

If the upper edge 428.1 is not parallel to the knife edge 412, a situation occurs, in which the relative position on the left side and the relative position on the right side of Fig. 4c are present at the same time. For example, the relative position on the left side can correspond to a view along A-A as indicated in Fig. 4a, and the relative position on the right side can correspond to a view along B-B as indicated in Fig. 4a. In other words, the upper edge 428.1 (and, thus, the specimen block) is rotated about the third axis y.

With the situation illustrated in Fig. 4c, when the specimen block is moved down in the cutting direction c, the illuminated area will become narrower (with respect to width W) only where the upper edge 428.1 reaches or moves below the knife edge 412. The narrowing of the illuminated area starts at the right side according to Fig. 4b, moving on to the left side. This results in the actual illuminated area becoming smaller and smaller until it disappears. The illuminated area might be look like wedge shaped during such movement. This is illustrated in Fig. 4d with the knife edge 412 and the front face 428 on the lower side, viewed along axis y, and the wedge-shaped illuminated area 438 on the upper side (the illuminated area as viewed along the cutting direction c).

In other words, the width W of the light gap changes (decreases) along the length L with moving the specimen block down in the cutting direction. The further the specimen block is moved down, the further the decreased width moves towards the end of the length L. This change occurs over a certain distance in the cutting direction c, where this distance depends on how far the upper edge 428.1 is rotated out of the position where it is parallel to the knife edge. Afterwards, the illuminated area becomes wedge shaped, becoming smaller and finally disappears.

A reason why the width W of the light becomes narrower with the upper edge 428.1 moving down to and then below the knife edge 412 is that light beams or light rays reflected at the upper end of the knife surface, near the knife edge 412, will then not be reflected at the front surface any more. Thus, this light ray cannot contribute to the illuminated area anymore, resulting in a narrower illuminated area.

Thus, in an embodiment, the microtome system can be configured to control
the third actor as the actor such that the upper edge and/or the lower edge of the front face of the specimen block is arranged parallel to the knife edge, such that, during relative movement in the cutting direction between the knife edge and the specimen block when held by the specimen holder the at geometric feature comprises a dimension (e.g., the width W) that remains constant along the length L of the illuminated area over a predetermined upper region up to the upper edge of the front face and then decreases evenly along the length of the illuminated area and/or over a predetermined lower region down to the lower edge of the front face and then decreases evenly along the length of the illuminated area

While in an embodiment, such aligning or arranging can be performed automatically, in another embodiment, indications might be generated from the geometric feature and provided to the user, as mentioned above.

The different geometric features explained with respect to Figs. 4a to 4d are also explained, partly in more detail, in EP 4 269 983 A1. Each of these geometric features of the illuminated area (light gap) can be determined from the illuminated area detected by the detector (including analyzing it) particularly well when the the illumination intensity of the light reflected by the fine facet and the illumination intensity of the light reflected by at least the part of the coarse face differ from each other by less than 50% or less than 20% or less than 10% or are even essentially equal to each other. A reason is that the illuminated area then has a sufficiently high width such that the analyses is possible in an automated way.

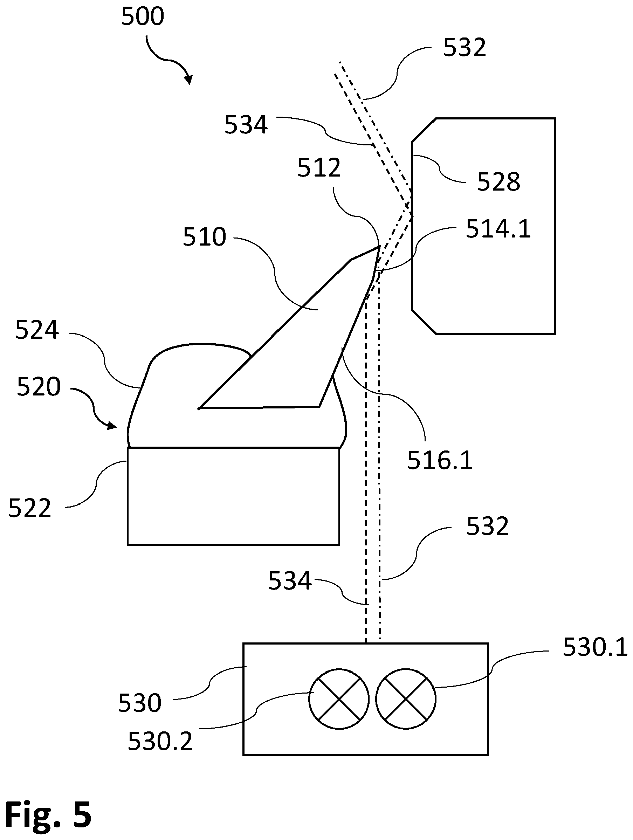

Fig. 5 illustrates a microtome system 500 in an embodiment. The microtome system 500 can basically correspond to the microtome system 100 of Fig. 1a, for example; like components and elements are referred to by like reference numerals. Note that only some of the components and elements are shown and referred to by reference numerals for sake of easy understanding.

Different to the microtome system 100, however, the illumination source 530 of microtome system 500 comprises, by means of example, a first light source 530.1 and a second light source 530.2. The first light source 530.1 is configured to illuminate the fine facet 514.1 (see light beam 532) and the second light source 530.2 is configured to illuminate at least the part of the coarse facet 516.1 (see light beam 534); both facets are, in particular, illuminated directly by the respective light source. In that two light sources are provided, the illumination of the facets and, thus, the illumination intensities of the light reflected by them can be improved.

It is noted that instead of two explicit light sources, light could be specifically guided using, e.g., light fibers, from a single illumination source to the respective location, what also results in additional light sources.

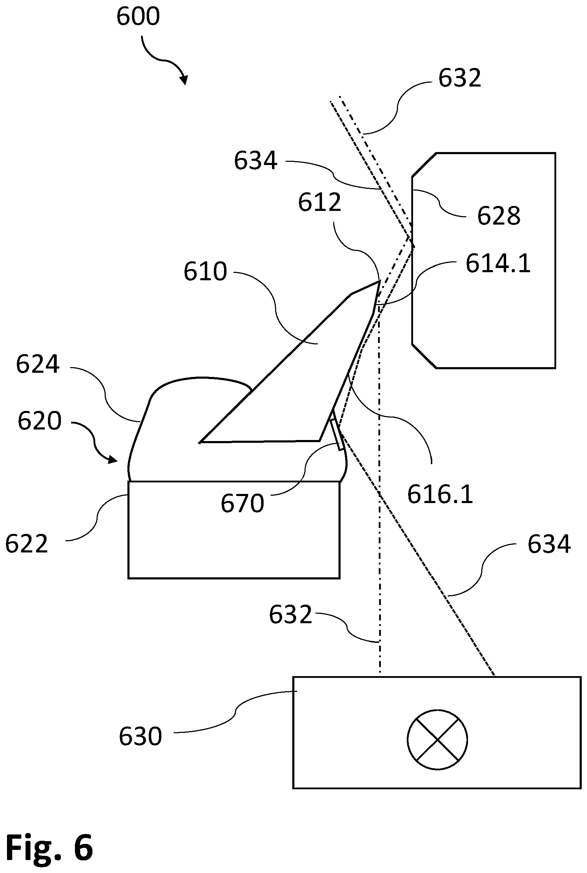

Fig. 6 illustrates a microtome system 600 in an embodiment. The microtome system 600 can basically correspond to the microtome system 100 of Fig. 1a, for example; like components and elements are referred to by like reference numerals. Note that only some of the components and elements are shown and referred to by reference numerals for sake of easy understanding.

Different to the microtome system 100, however, the illumination source 530 of microtome system 500 or the knife holder 620 thereof comprises, by means of example, a mirror 670. The coarse facet 616.1 is illuminated indirectly via the mirror 570, i.e., light from the illumination source 630 that reaches the mirror 670 (see light beam 634) is reflected by the mirror 670 to the coarse facet 616.1. In that way, the reflection of light at the knife holder 620 is improved. The illumination of the facets and, thus, the illumination intensities of the light reflected by them can be improved.

It is noted that instead of such mirror, another element that has a reflecting or diffuse or partially diffuse reflecting surface can be used. Also, the knife holder 620 could have a surface that is reflecting or diffuse reflecting or partially diffuse reflecting in order to achieve the same or similar effect.

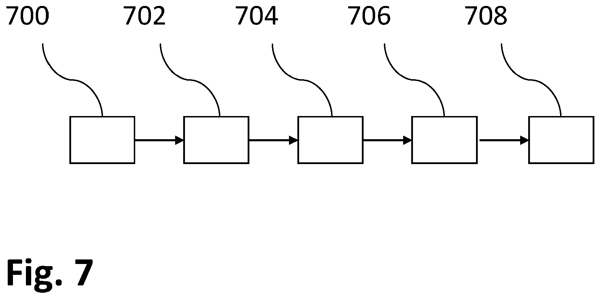

Fig. 7 illustrates a method according to a further embodiment of the invention by means of a flow diagram. Such method can be performed, for example, using a microtome system 100, 300, 500 or 600 as illustrated in Figs. 1a, 1b, 3a, 3b, 5 and 6 and described above.

In a step 700, the knife can be arranged at or in the knife holder110 and the specimen block can be arranged at or in the specimen holder. In a step 702, a gap between the front face of the specimen block and the knife edge is illuminated, such that the fine facet and at least a part of the coarse facet are illuminated and the light reflected by them is reflected to the detector, by the front face of the specimen block. In this way, a perceivable illuminated area is produced, wherein at least a part of the knife edge and at least a part of an image of the knife edge mirrored by the front face of the specimen block form boundaries of the illuminated area, as shown in Figs. 2a, 2b for example. The light reflected by the fine facet and the light reflected by at least the part of the coarse facet have essentially the same illumination intensity.

In a step 704, the illuminated area is imaged by a detector and, in step 706, a geometric feature of the illuminated area is determined, based on the imaged illuminated area. In step 708, the edge of the knife is aligned with the front face of the specimen block based on the geometric feature. This can comprise either automatic alignment and/or manual alignment. Further, this can comprise the different geometric features and the respect alignments to be done as described with respect to Figs. 4a to 4d, for example.

It is noted that steps 702 to 708 for example, can be performed by means of the controller, either by processing data in it or in that the controller controls the respective components to perform the respective step.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microtome system comprising a controller as described in connection with one or more of the Figs. 1 to 6. Alternatively, a microtome may be part of or connected to a system as described in connection with one or more of the Figs. 1 to 6. Fig. 3 shows a schematic illustration of a microtome system 300 configured to perform a method described herein. The microtome system 300 comprises a detector 340 and a computer system or controller 362. The detector 340 is configured to take images and is connected to the computer system 362. The computer system 362 is configured to execute at least a part of a method described herein. The computer system 362 may be configured to execute a machine learning algorithm. The computer system 350 and detector 340 may be separate entities but can also be integrated together in one common housing. The computer system 362 may be part of a central processing system of the detector 340 and/or the computer system 362 may be part of a subcomponent of the detector 340, such as a sensor, an actor, a camera or an illumination unit, etc. of the detector 340.

The computer system 362 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 362 may comprise any circuit or combination of circuits. In one embodiment, the computer system 362 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 362 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 362 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 25 may also include a display device, one or more speakers, and a keyboard and/or controller, which can include a mouse, trackball, touch screen, voice-recognition device, or any other device that permits a system user to input information into and receive information from the computer system 362.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100, 300, 500, 600: microtome system
- 110, 310, 510, 610: knife
- 112, 212, 312, 412, 512, 612: knife edge
- 114.1, 514.1, 614.1: fine facet
- 114.2: other fine facet
- 116.1, 516.1, 616.1: coarse facet
- 116.2: other coarse facet
- 118: angle
- 120, 320, 520 620: knife holder
- 122: base element
- 124: mounting means
- 126, 326: specimen block
- 128, 228, 328, 428, 528, 628: front face
- 130, 330, 530, 630: illumination source
- 132, 134, 532, 534, 634, 634: light beams
- 136, 236: gap
- 140, 340, 540, 640: detector

- 238, 238a, 238b, 438: illuminated area
- 238.1: first part of illuminated area
- 238.2: second part of illuminated area

- 302: housing
- 350: specimen holder
- 352: microscope
- 354: display
- 356: instructions
- 358: collecting box
- 360.1, 360.2, 360.3: actor
- 362: controller
- 364: hand wheel

- 438.1: first boundary
- 438.2: second boundary

- 530.1: first light source
- 530.2: second light source

- 670: mirror

- 700-708: method step

- x, y, z, z': axis
- b: feed direction
- c: cutting direction
- d: width of gap
- W: width of illumination area
- L: length of illumination area

## Claims

1. A microtome system (100, 300, 500, 600) for cutting sections from a specimen block, wherein the microtome system (100) comprises:
- a specimen holder (350), configured to hold a specimen block (126),
- a knife (110) having a knife edge (112, 212, 412) configured to cut a section from the specimen block (126, 426), wherein the knife (110) comprises a fine facet (114.1) and a coarse facet (116.1), wherein the knife edge (112, 212, 412) is formed, at least in part, by the fine facet (114.1),
- a knife holder (120) configured to hold said knife (110),
- an illumination source (130, 330), and
- a detector (140, 240, 340),
wherein the illumination source (130, 330) is configured to illuminate a gap (136, 236) between a front face (128, 228) of the specimen block (126) and the knife edge (112, 212), when the specimen block (126) is held in the specimen holder, such that the fine facet (114.1) and at least a part of the coarse facet (116.1) are illuminated and the light reflected by them is reflected to the detector (140, 240, 340), by the front face (128) of the specimen block (126), such that a perceivable illuminated area (238a, 238b, 438) is produced, wherein at least a part of the knife edge (112, 212, 412) and at least a part of an image of the knife edge mirrored by the front face (128, 428) of the specimen block (126) form boundaries (438.1, 438.2) of the illuminated area (238a, 238b, 438), and
wherein the microtome system (100, 300, 500, 600) is configured to image, by means of the detector (140, 240, 340), the illuminated area (238a, 238b, 438), and to determine, based on the imaged illuminated area (238a, 238b, 438), a geometric feature of the illuminated area, and **characterised in that** the light reflected by the fine facet (114.1) and the light reflected by at least the part of the coarse facet (116.1) have essentially the same illumination intensity.

2. The microtome system (100, 300, 500, 600) of claim 1, wherein the illumination intensity of the light reflected by the fine facet (114.1) and the illumination intensity of the light reflected by at least the part of the coarse face (116.1) differ from each other by less than 50% or less than 20% or less than 10%, so that both illumination intensities are essentially the same.

3. The microtome system (100, 300, 500, 600) of claim 1 or 2, wherein the fine facet (114.1) and the coarse facet (116.1) are formed at an angle (118) of less than 1° to each other.

4. The microtome system (500) of any one of the preceding claims, wherein the illumination source (130) is configured to illuminate the gap (136, 236) between the front face (128, 228) of the specimen block and the knife edge (112, 212), when the specimen block is held in the specimen holder, such that at least the part of the coarse facet (116.1) is illuminated directly, and wherein the light, originating from the direct illumination and reflected by at least the part of the coarse facet is reflected, to the detector (140), by the front face (128) of the specimen block (126).

5. The microtome system (100, 300, 500, 600) of any one of the preceding claims, wherein the illuminated area (238a, 238b) has a width (W), seen from the knife edge (112, 212) to the front face (128, 228) of the specimen block, of more than 10 µm or more than 20 µm.

6. The microtome system (100, 300, 600) of any one of the preceding claims, wherein the illumination source (130) is configured to illuminate the gap (136, 236) between the front face (128, 228) of the specimen block and the knife edge (112, 212), when the specimen block is held in the specimen holder, such that at least the part of the coarse facet (116.1) is illuminated indirectly via the knife holder (120), and wherein the light, originating from the indirect illumination and reflected by least the part of the coarse facet is reflected, to the detector (140), by the front face (128) of the specimen block (126).

7. The microtome system (100, 300, 600) of claim 6, wherein the knife holder (120) has a surface that is reflecting or diffuse reflecting or partially diffuse reflecting, and wherein at least the part of the coarse facet (116.1) is illuminated indirectly via the surface of knife holder (120).

8. The microtome system (100, 300, 600) of claim 6 or 7, wherein the knife holder (120) comprises a mirror (670) or a separate element that has a reflecting or diffuse or partially diffuse reflecting surface, and wherein at least the part of the coarse facet (116.1) is illuminated indirectly via the mirror or the surface of the separate element.

9. The microtome system (500) of any one of the preceding claims, wherein the illumination source (130) comprises a first light source (530.1) and a second light source (530.2),
wherein the first light source is configured to illuminate the fine facet (114.1, 514.1), and
wherein the second light source is configured to illuminate at least the part of the coarse facet (116.1, 516.2).

10. The microtome system (100, 300, 500, 600) of any one of the preceding claims, wherein the microtome system further comprises an actor (360.1, 360.2, 360.3),
wherein the knife holder (120) and the specimen holder are configured to be movable relative to one another,
wherein the actor is configured to cause a movement of the knife holder (120) or the specimen holder about the axis, and
wherein the microtome system (100) is configured to:
a) automatically align, based on the geometric feature of the illuminated area (238a, 238b), the knife edge (112, 212) with the front face (128, 228) of the specimen block by controlling the actor, and/or
b) provide indications to a user, based on the detected geometric feature of the illuminated area (238a, 238b), on how to manually control the actor in order to align the knife edge (112, 212) with the front face (128, 228) of the specimen block.

11. The microtome system (100, 300, 500, 600) of claim 10, configured to control the actor for arranging the knife edge (112, 212) parallel to the front face (128, 228) of the specimen block, such that the geometric feature of the detected illuminated area comprises a constant width along an illuminated area length.

12. The microtome system (100, 300, 500, 600) of any one of the preceding claims, wherein the knife holder (120) and the specimen holder are configured to be movable relative to one another in a cutting direction (c), and
wherein the microtome system (100, 300, 500, 600) is configured to image, by means of the detector (140), the illuminated area (238a, 238b) for at least two different positions of the knife holder (120) and the specimen holder relative to one another in the cutting direction.

13. A method for aligning a knife edge (112, 212) of a knife (110) with a front face (128, 228) of a specimen block (126) for cutting sections from the specimen block,
wherein the specimen block (126) is held by a specimen holder,
wherein the knife (110) is held by a knife holder (120), wherein the knife (110) comprises a fine facet (114.1) and a coarse facet (116.1), and wherein the knife edge (112, 212) is formed, at least in part, by the fine facet (114.1),
wherein the method comprises:
illuminating a gap (136, 236) between the front face (128, 228) of the specimen block (126) and the knife edge (112, 212), such that the fine facet (114.1) and at least a part of the coarse facet (116.2) are illuminated and the light reflected by them is reflected, to the detector (140), by the front face (128) of the specimen block (126), such that a perceivable illuminated area (238a, 238b) is produced, wherein at least a part of the knife edge (112, 212) and at least a part of an image of the knife edge mirrored by the front face (128) of the specimen block (126) form boundaries of the illuminated area, and wherein the light reflected by the fine facet (114.1) and the light reflected by at least the part of the coarse facet (116.1) have essentially the same illumination intensity;
imaging, by means of a detector, the illuminated area (238a, 238b),
determining, based on the imaged illuminated area (238a, 238b), a geometric feature of the illuminated area, and
aligning the edge (112, 212) of the knife with the front face (128, 228) of the specimen block based on the geometric feature.

14. The method of claim 13, using the microtome system (100, 300, 500, 600) of any one of claims 1 to 12.

## Patentansprüche

1. Mikrotomsystem (100, 300, 500, 600) zum Abschneiden von Schnitten von einem Probenblock, wobei das Mikrotomsystem (100) umfasst:
- einen Probenhalter (350), konfiguriert zum Halten eines Probenblocks (126),
- ein Messer (110) aufweisend eine Messerschneide (112, 212, 412), das zum Abschneiden eines Schnitts von dem Probenblock (126, 426) konfiguriert ist, wobei das Messer (110) eine feine Facette (114.1) und eine grobe Facette (116.1) umfasst, wobei die Messerschneide (112, 212, 412) zumindest teilweise durch die feine Facette (114.1) gebildet ist,
- einen Messerhalter (120), konfiguriert zum Halten des Messers (110),
- eine Beleuchtungsquelle (130, 330), und
- einen Detektor (140, 240, 340),
wobei die Beleuchtungsquelle (130, 330) dazu konfiguriert ist, einen Spalt (136, 236) zwischen einer Vorderfläche (128, 228) des Probenblocks (126) und der Messerschneide (112, 212) zu beleuchten, wenn der Probenblock (126) in dem Probenhalter gehalten wird, sodass die feine Facette (114.1) und zumindest ein Teil der groben Facette (116.1) beleuchtet werden und das von diesen reflektierte Licht an den Detektor (140, 240, 340), mittels der Vorderfläche (128) des Probenblocks (126), reflektiert wird, sodass ein wahrnehmbarer beleuchteter Bereich (238a, 238b, 438) erzeugt wird, wobei zumindest ein Teil der Messerschneide (112, 212, 412) und zumindest ein Teil eines Bildes der Messerschneide, das von der Vorderfläche (128, 428) des Probenblocks (126) gespiegelt wird, Begrenzungen (438.1, 438.2) des beleuchteten Bereichs (238a, 238b, 438) bilden, und
wobei das Mikrotomsystem (100, 300, 500, 600) dazu konfiguriert ist, mittels des Detektors (140, 240, 340) den beleuchteten Bereich (238a, 238b, 438) abzubilden, und auf der Grundlage des abgebildeten beleuchteten Bereichs (238a, 238b, 438) ein geometrisches Merkmal des beleuchteten Bereichs zu bestimmen, und **dadurch gekennzeichnet ist, dass** das von der feinen Facette (114.1) reflektierte Licht und das von zumindest dem Teil der groben Facette (116.1) reflektierte Licht im Wesentlichen die gleiche Beleuchtungsintensität aufweisen.

2. Mikrotomsystem (100, 300, 500, 600) nach Anspruch 1, wobei die Beleuchtungsintensität des von der feinen Facette (114.1) reflektierten Lichts und die Beleuchtungsintensität des von zumindest dem Teil der groben Facette (116.1) reflektierten Lichts um weniger als 50 % oder weniger als 20 % oder weniger als 10 % voneinander unterschiedlich sind, sodass beide Beleuchtungsintensitäten im Wesentlichen gleich sind.

3. Mikrotomsystem (100, 300, 500, 600) nach Anspruch 1 oder 2, wobei die feine Facette (114.1) und die grobe Facette (116.1) in einem Winkel (118) von weniger als 1° zueinander gebildet sind.

4. Mikrotomsystem (500) nach einem der vorstehenden Ansprüche, wobei die Beleuchtungsquelle (130) dazu konfiguriert ist, den Spalt (136, 236) zwischen der Vorderfläche (128, 228) des Probenblocks und der Messerschneide (112, 212) zu beleuchten, wenn der Probenblock in dem Probenhalter gehalten wird, sodass zumindest der Teil der groben Facette (116.1) direkt beleuchtet wird, und wobei das Licht, das von der direkten Beleuchtung stammt und von zumindest dem Teil der groben Facette reflektiert wird, mittels der Vorderfläche (128) des Probenblocks (126) an den Detektor (140) reflektiert wird.

5. Mikrotomsystem (100, 300, 500, 600) nach einem der vorstehenden Ansprüche, wobei der beleuchtete Bereich (238a, 238b) eine Breite (W), gesehen von der Messerschneide (112, 212) zu der Vorderfläche (128, 228) des Probenblocks, von mehr als 10 µm oder mehr als 20 µm aufweist.

6. Mikrotomsystem (100, 300, 600) nach einem der vorstehenden Ansprüche, wobei die Beleuchtungsquelle (130) dazu konfiguriert ist, den Spalt (136, 236) zwischen der Vorderfläche (128, 228) des Probenblocks und der Messerschneide (112, 212) zu beleuchten, wenn der Probenblock in dem Probenhalter gehalten wird, sodass zumindest der Teil der groben Facette (116.1) indirekt über den Messerhalter (120) beleuchtet wird, und wobei das Licht, das von der indirekten Beleuchtung stammt und von zumindest dem Teil der groben Facette reflektiert wird, mittels der Vorderfläche (128) des Probenblocks (126) an den Detektor (140) reflektiert wird.

7. Mikrotomsystem (100, 300, 600) nach Anspruch 6, wobei der Messerhalter (120) eine Fläche aufweist, die reflektierend oder diffus reflektierend oder teilweise diffus reflektierend ist, und wobei zumindest der Teil der groben Facette (116.1) indirekt über die Fläche des Messerhalters (120) beleuchtet wird.

8. Mikrotomsystem (100, 300, 600) nach Anspruch 6 oder 7, wobei der Messerhalter (120) einen Spiegel (670) oder ein separates Element umfasst, das eine reflektierende oder diffuse oder teilweise diffus reflektierende Fläche aufweist, und wobei zumindest der Teil der groben Facette (116.1) indirekt über den Spiegel oder die Fläche des separaten Elements beleuchtet wird.

9. Mikrotomsystem (500) nach einem der vorstehenden Ansprüche, wobei die Beleuchtungsquelle (130) eine erste Lichtquelle (530.1) und eine zweite Lichtquelle (530.2) umfasst,
wobei die erste Lichtquelle zum Beleuchten der feinen Facette (114.1, 514.1) konfiguriert ist, und
wobei die zweite Lichtquelle zum Beleuchten zumindest des Teils der groben Facette (116.1, 516.2) konfiguriert ist.

10. Mikrotomsystem (100, 300, 500, 600) nach einem der vorstehenden Ansprüche, wobei das Mikrotomsystem weiter ein Betätigungselement (360.1, 360.2, 360.3) umfasst,
wobei der Messerhalter (120) und der Probenhalter dazu konfiguriert sind, in Bezug aufeinander bewegbar zu sein,
wobei das Betätigungselement dazu konfiguriert ist, eine Bewegung des Messerhalters (120) oder des Probenhalters um die Achse zu bewirken, und
wobei das Mikrotomsystem (100) konfiguriert ist zum:
a) automatischen Ausrichten, auf der Grundlage des geometrischen Merkmals des beleuchteten Bereichs (238a, 238b), der Messerschneide (112, 212) mit der Vorderfläche (128, 228) des Probenblocks durch Steuern des Betätigungselements, und/oder
b) Bereitstellen von Hinweisen an einen Benutzer, auf der Grundlage des erfassten geometrischen Merkmals des beleuchteten Bereichs (238a, 238b), zur manuellen Steuerung des Betätigungselements, um die Messerschneide (112, 212) mit der Vorderfläche (128, 228) des Probenblocks auszurichten.

11. Mikrotomsystem (100, 300, 500, 600) nach Anspruch 10, das zum Steuern des Betätigungselements konfiguriert ist, um die Messerschneide (112, 212) parallel zu der Vorderfläche (128, 228) des Probenblocks anzuordnen, sodass das geometrische Merkmal des erfassten beleuchteten Bereichs eine konstante Breite entlang einer Länge des beleuchteten Bereichs umfasst.

12. Mikrotomsystem (100, 300, 500, 600) nach einem der vorstehenden Ansprüche, wobei der Messerhalter (120) und der Probenhalter dazu konfiguriert sind, in Bezug aufeinander in einer Schneiderichtung (c) bewegbar zu sein, und
wobei das Mikrotomsystem (100, 300, 500, 600) dazu konfiguriert ist, mittels des Detektors (140) den beleuchteten Bereich (238a, 238b) für zumindest zwei unterschiedliche Positionen des Messerhalters (120) und des Probenhalters in Bezug aufeinander in der Schneiderichtung abzubilden.

13. Verfahren zum Ausrichten einer Messerschneide (112, 212) eines Messers (110) mit einer Vorderfläche (128, 228) eines Probenblocks (126), um Schnitte von dem Probenblock abzuschneiden,
wobei der Probenblock (126) durch einen Probenhalter gehalten wird,
wobei das Messer (110) durch einen Messerhalter (120) gehalten wird, wobei das Messer (110) eine feine Facette (114.1) und eine grobe Facette (116.1) umfasst, und wobei die Messerschneide (112, 212) zumindest teilweise durch die feine Facette (114.1) gebildet ist,
wobei das Verfahren Folgendes umfasst:
Beleuchten eines Spalts (136, 236) zwischen der Vorderfläche (128, 228) des Probenblocks (126) und der Messerschneide (112, 212), sodass die feine Facette (114.1) und zumindest ein Teil der groben Facette (116.2) beleuchtet werden und das von diesen reflektierte Licht an den Detektor (140), mittels der Vorderfläche (128) des Probenblocks (126), reflektiert wird, sodass ein wahrnehmbarer beleuchteter Bereich (238a, 238b) erzeugt wird, wobei zumindest ein Teil der Messerschneide (112, 212) und zumindest ein Teil eines Bildes der Messerschneide, das von der Vorderfläche (128) des Probenblocks (126) gespiegelt wird, Begrenzungen des beleuchteten Bereichs bilden, und wobei das von der feinen Facette (114.1) reflektierte Licht und das von zumindest dem Teil der groben Facette (116.1) reflektierte Licht im Wesentlichen die gleiche Beleuchtungsintensität aufweisen;
Abbilden, mittels eines Detektors, des beleuchteten Bereichs (238a, 238b),
Bestimmen, auf der Grundlage des abgebildeten beleuchteten Bereichs (238a, 238b), eines geometrischen Merkmals des beleuchteten Bereichs, und
Ausrichten der Schneide (112, 212) des Messers mit der Vorderfläche (128, 228) des Probenblocks auf der Grundlage des geometrischen Merkmals.

14. Verfahren nach Anspruch 13, welches das Mikrotomsystem (100, 300, 500, 600) nach einem der Ansprüche 1 bis 12 verwendet.

## Revendications

1. Système (100, 300, 500, 600) de microtome pour couper des sections dans un bloc d'échantillon, dans lequel le système (100) de microtome comprend :
- un porte-échantillon (350), configuré pour maintenir un bloc (126) d'échantillon,
- un couteau (110) présentant un tranchant (112, 212, 412) de couteau configuré pour couper une section dans le bloc (126, 426) d'échantillon, dans lequel le couteau (110) comprend une facette fine (114.1) et une facette grossière (116.1), dans lequel le tranchant (112, 212, 412) de couteau est formé, au moins en partie, par la facette fine (114.1),
- un porte-couteau (120) configuré pour maintenir ledit couteau (110),
- une source d'éclairage (130, 330), et
- un détecteur (140, 240, 340),
dans lequel la source d'éclairage (130, 330) est configurée pour éclairer un espace (136, 236) entre une face avant (128, 228) du bloc (126) d'échantillon et le tranchant (112, 212) de couteau, lorsque le bloc (126) d'échantillon est maintenu dans le porte-échantillon, de sorte que la facette fine (114.1) et au moins une partie de la facette grossière (116.1) sont éclairées et la lumière réfléchie par celles-ci est réfléchie vers le détecteur (140, 240, 340), par la face avant (128) du bloc (126) d'échantillon, de sorte qu'une zone éclairée (238a, 238b, 438) perceptible est produite, dans lequel au moins une partie du tranchant (112, 212, 412) de couteau et au moins une partie d'une image du tranchant de couteau réfléchie par la face avant (128, 428) du bloc (126) d'échantillon forment des limites (438.1, 438.2) de la zone éclairée (238a, 238b, 438), et
dans lequel le système (100, 300, 500, 600) de microtome est configuré pour imager, au moyen du détecteur (140, 240, 340), la zone éclairée (238a, 238b, 438), et pour déterminer, sur la base de la zone éclairée (238a, 238b, 438) imagée, une caractéristique géométrique de la zone éclairée, et **caractérisé en ce que** la lumière réfléchie par la facette fine (114.1) et la lumière réfléchie par au moins la partie de la facette grossière (116.1) présentent essentiellement la même intensité d'éclairage.

2. Système (100, 300, 500, 600) de microtome selon la revendication 1, dans lequel l'intensité d'éclairage de la lumière réfléchie par la facette fine (114.1) et l'intensité d'éclairage de la lumière réfléchie par au moins la partie de la facette grossière (116.1) diffèrent l'une de l'autre de moins de 50 % ou de moins de 20 % ou de moins de 10 %, de sorte que les deux intensités d'éclairage sont essentiellement identiques.

3. Système (100, 300, 500, 600) de microtome selon la revendication 1 ou la revendication 2, dans lequel la facette fine (114.1) et la facette grossière (116.1) sont formées à un angle (118) inférieur à 1° l'une par rapport à l'autre.

4. Système (500) de microtome selon l'une quelconque des revendications précédentes, dans lequel la source d'éclairage (130) est configurée pour éclairer l'espace (136, 236) entre la face avant (128, 228) du bloc d'échantillon et le tranchant (112, 212) de couteau, lorsque le bloc d'échantillon est maintenu dans le porte-échantillon, de sorte qu'au moins la partie de la facette grossière (116.1) est éclairée directement, et dans lequel la lumière, provenant de l'éclairage direct et réfléchie par au moins la partie de la facette grossière est réfléchie, vers le détecteur (140), par la face avant (128) du bloc (126) d'échantillon.

5. Système (100, 300, 500, 600) de microtome selon l'une quelconque des revendications précédentes, dans lequel la zone éclairée (238a, 238b) présente une largeur (W), vue depuis le tranchant (112, 212) de couteau vers la face avant (128, 228) du bloc d'échantillon, de plus de 10 µm ou de plus de 20 µm.

6. Système (100, 300, 600) de microtome selon l'une quelconque des revendications précédentes, dans lequel la source d'éclairage (130) est configurée pour éclairer l'espace (136, 236) entre la face avant (128, 228) du bloc d'échantillon et le tranchant (112, 212) de couteau, lorsque le bloc d'échantillon est maintenu dans le porte-échantillon, de sorte qu'au moins la partie de la facette grossière (116.1) est éclairée indirectement via le porte-couteau (120), et dans lequel la lumière, provenant de l'éclairage indirect et réfléchie par au moins la partie de la facette grossière est réfléchie, vers le détecteur (140), par la face avant (128) du bloc (126) d'échantillon.

7. Système (100, 300, 600) de microtome selon la revendication 6, dans lequel le porte-couteau (120) présente une surface qui est réfléchissante ou à réflexion diffuse ou à réflexion partiellement diffuse, et dans lequel au moins la partie de la facette grossière (116.1) est éclairée indirectement via la surface du porte-couteau (120).

8. Système (100, 300, 600) de microtome selon la revendication 6 ou la revendication 7, dans lequel le porte-couteau (120) comprend un miroir (670) ou un élément séparé qui présente une surface réfléchissante ou à réflexion diffuse ou partiellement diffuse, et dans lequel au moins la partie de la facette grossière (116.1) est éclairée indirectement via le miroir ou la surface de l'élément séparé.

9. Système (500) de microtome selon l'une quelconque des revendications précédentes, dans lequel la source d'éclairage (130) comprend une première source (530.1) de lumière et une seconde source (530.2) de lumière,
dans lequel la première source de lumière est configurée pour éclairer la facette fine (114.1, 514.1), et
dans lequel la seconde source de lumière est configurée pour éclairer au moins la partie de la facette grossière (116.1, 516.2).

10. Système (100, 300, 500, 600) de microtome selon l'une quelconque des revendications précédentes, dans lequel le système de microtome comprend en outre un actionneur (360.1, 360.2, 360.3),
dans lequel le porte-couteau (120) et le porte-échantillon sont configurés pour être mobiles l'un par rapport à l'autre,
dans lequel l'actionneur est configuré pour provoquer un mouvement du porte-couteau (120) ou du porte-échantillon autour de l'axe, et
dans lequel le système (100) de microtome est configuré pour :
a) aligner automatiquement, sur la base de la caractéristique géométrique de la zone éclairée (238a, 238b), le tranchant (112, 212) de couteau avec la face avant (128, 228) du bloc d'échantillon en commandant l'actionneur, et/ou
b) fournir des indications à un utilisateur, sur la base de la caractéristique géométrique détectée de la zone éclairée (238a, 238b), sur la manière de commander manuellement l'actionneur afin d'aligner le tranchant (112, 212) de couteau avec la face avant (128, 228) du bloc d'échantillon.

11. Système (100, 300, 500, 600) de microtome selon la revendication 10, configuré pour commander l'actionneur pour agencer le tranchant (112, 212) de couteau parallèlement à la face avant (128, 228) du bloc d'échantillon, de telle sorte que la caractéristique géométrique de la zone éclairée détectée comprenne une largeur constante le long d'une longueur de zone éclairée.

12. Système (100, 300, 500, 600) de microtome selon l'une quelconque des revendications précédentes, dans lequel le porte-couteau (120) et le porte-échantillon sont configurés pour être mobiles l'un par rapport à l'autre dans une direction de coupe (c), et
dans lequel le système (100, 300, 500, 600) de microtome est configuré pour imager, au moyen du détecteur (140), la zone éclairée (238a, 238b) pour au moins deux positions différentes du porte-couteau (120) et du porte-échantillon l'un par rapport à l'autre dans la direction de coupe.

13. Procédé d'alignement d'un tranchant (112, 212) de couteau d'un couteau (110) avec une face avant (128, 228) d'un bloc (126) d'échantillon pour couper des sections dans le bloc d'échantillon,
dans lequel le bloc (126) d'échantillon est maintenu par un porte-échantillon,
dans lequel le couteau (110) est maintenu par un porte-couteau (120), dans lequel le couteau (110) comprend une facette fine (114.1) et une facette grossière (116.1), et dans lequel le tranchant (112, 212) de couteau est formé, au moins en partie, par la facette fine (114.1),
dans lequel le procédé comprend :
l'éclairage d'un espace (136, 236) entre la face avant (128, 228) du bloc (126) d'échantillon et le tranchant (112, 212) de couteau, de telle sorte que la facette fine (114.1) et au moins une partie de la facette grossière (116.2) soient éclairées et que la lumière réfléchie par celles-ci soit réfléchie, vers le détecteur (140), par la face avant (128) du bloc (126) d'échantillon, de sorte qu'une zone éclairée (238a, 238b) perceptible est produite, dans lequel au moins une partie du tranchant (112, 212) de couteau et au moins une partie d'une image du tranchant de couteau réfléchie par la face avant (128) du bloc (126) d'échantillon forment des limites de la zone éclairée, et dans lequel la lumière réfléchie par la facette fine (114.1) et la lumière réfléchie par au moins la partie de la facette grossière (116.1) présentent essentiellement la même intensité d'éclairage ;
l'imagerie, au moyen d'un détecteur, de la zone éclairée (238a, 238b),
la détermination, sur la base de la zone éclairée (238a, 238b) imagée, d'une caractéristique géométrique de la zone éclairée, et
l'alignement du tranchant (112, 212) du couteau avec la face avant (128, 228) du bloc d'échantillon sur la base de la caractéristique géométrique.

14. Procédé selon la revendication 13, utilisant le système (100, 300, 500, 600) de microtome selon l'une quelconque des revendications 1 à 12.
